# EUROPEAN PATENT APPLICATION

(11) **EP 3 267 446 A1**
(43) Date of publication of application: **10.01.2018**
(21) Application number: 16761628.3
(22) Date of filing: 03.03.2016
(51) Int. Cl.: H01G 9/12, H01G 11/14, H01M 2/12

(54) **HYDROGEN DISCHARGE MEMBRANE**

(30) Priority: 06.03.2015 JP 2015044805; 02.03.2016 JP 2016039834
(71) Applicant: Nitto Denko Corporation, Ibaraki-shi, Osaka 567-8680 (JP)
(72) Inventor: MASAKI,Shunsuke, Ibaraki-shi Osaka 567-8680 (JP); FUKUOKA,Takahiro, Ibaraki-shi Osaka 567-8680 (JP); ISHII,Kyoko, Ibaraki-shi Osaka 567-8680 (JP); FUJIWARA,Keiko, Ibaraki-shi Osaka 567-8680 (JP)
(74) Representative: Grünecker Patent- und Rechtsanwälte PartG mbB
(86) International application number: PCT/JP2016/056587
(87) International publication number: WO 2016/143658

(57) **Abstract**

An object of the invention is to provide a hydrogen-releasing film which rarely undergoes the deterioration in hydrogen-releasing performance even when used for a long period. In addition, it is another object of the present invention to provide a safety valve for an electrochemical element, wherein the valve is provided with the hydrogen-releasing film, and to provide an electrochemical element having the safety valve. A hydrogen-releasing film having a metal layer, wherein at least one surface of the hydrogen-releasing film has a water contact angle of 85° or more.

## Description

### TECHNICAL FIELD

The present invention relates to a hydrogen-releasing film that is provided on an electrochemical element such as a battery, a condenser, a capacitor, a sensor, or the like.

### BACKGROUND ART

In recent years, aluminum electrolytic capacitors have been used in an application for inverters such as the wind power generation and solar power generation, and large-scale power sources such as batteries. In the aluminum electrolytic capacitors, hydrogen gas may be generated therein by a reverse voltage, overvoltage, and overcurrent, and there is a risk of rupture of an outer case by an increase in the internal pressure due to the generation of a large amount of hydrogen gas.

Therefore, ordinary aluminum electrolytic capacitors are provided with a safety valve having a special film. In addition to a function of releasing hydrogen gas in the inside of the capacitor to the outside, the safety valve has another function of preventing the rupture of the capacitor itself by self-destruction enabling to decrease the internal pressure of the capacitor when it is abruptly increased. As the special film that is a component of such a safety valve, for example, the following has been proposed.

Patent Document 1 has proposed a pressure regulator film equipped with a foil strip composed of a Pd-Ag alloy wherein 20 wt% (19.8 mol%) of Ag is incorporated into palladium.

However, the foil strip of Patent Document 1 has a problem that it tends to become brittle in an environment of about 50 to 60°C or less and cannot maintain the function as a pressure regulator film for a long period of time. Thus, such a foil strip has not been put into practical use.

On the other hand, lithium-ion batteries are widely used in cellular phones, notebook computers, automobiles, or the like. Also in recent years, an interest in security for the lithium-ion batteries has grown in addition to higher capacity and improved cycle characteristics. In particular, gas generation in the cells of the lithium-ion batteries is known, and expansion and rupture of the battery pack accompanied with an internal pressure rise are concerned.

Patent Document 2 discloses use of an amorphous alloy (for example, 36Zr-64Ni alloy) composed of zirconium (Zr) and nickel (Ni) as a hydrogen permselective alloy film that selectively permeates hydrogen gas generated in the battery.

However, since the amorphous alloy becomes brittle due to the formation of a hydride compound (ZrH₂) upon contact with hydrogen at a low temperature range (e.g. 50°C), such an amorphous alloy had a problem that it could not maintain the function as a pressure regulator film for a long period of time.

In order to solve the above problem, Patent Document 3 has proposed a hydrogen-releasing film comprising a Pd-Ag alloy wherein the content of Ag in the Pd-Ag alloy is 20 mol% or more.

Although the hydrogen-releasing film of Patent Document 3 is not easily embrittled at the use temperature of the electrochemical element and has a sufficient hydrogen-releasing performance at the beginning of its use, there was a problem that the hydrogen-releasing performance gradually deteriorates depending on the use environment.

### Prior Art Document

### Patent Documents

Patent Document 1: Japanese patent No. 4280014
Patent Document 2: JP-A-2003-297325
Patent Document 3: WO2014/098038

### SUMMARY OF THE INVENTION

### Problems to be Solved by the Invention

The present invention has been made in view of the above problems, and an object of the invention is to provide a hydrogen-releasing film which rarely undergoes the deterioration in hydrogen-releasing performance even when used for a long period. In addition, it is another object of the present invention to provide a safety valve for an electrochemical element, wherein the valve is provided with the hydrogen-releasing film, and to provide an electrochemical element having the safety valve.

### MEANS FOR SOLVING THE PROBLEMS

The invention is related to a hydrogen-releasing film having a metal layer, wherein at least one surface of the hydrogen-releasing film has a water contact angle of 85° or more.

The inventors of the present invention have conducted intensive studies on the cause of the gradual deterioration in the hydrogen-releasing performance of the hydrogen-releasing film of the conventional art and have found that such gradual deterioration is not caused by embrittlement of the metal layer with hydrogen, but is caused by contamination of the film surface of the hydrogen-releasing film, particularly the hydrogen-introducing side surface (the inner side surface when the hydrogen-releasing film is provided in the electrochemical element) as a result of contacting with a gas generated from the electrolyte solution or constituent members (e.g. a tube, an electrode lead material, an electrolytic paper, a fixing material, a tape, etc.) inside the electrochemical element. Further, the present inventors have found that such gradual deterioration in the hydrogen-releasing performance is caused by corrosion (oxidation or sulfuration, etc.) of the metal layer of the hydrogen-releasing film by the gas-derived contaminants adhering to the film surface. Such a phenomenon does not pose a problem in a conventional metal film for hydrogen purification used at a high temperature of 400°C or more in order to separate high purity hydrogen from a mixed gas. Also, since a hydrogen-releasing film using a metal film has not been put into practical use, it has not been known so far.

As a result of extensive studies on the solution based on the above findings, the present inventor has found that when the water contact angle on the film surface of the hydrogen-releasing film is 85° or more, not only gas-derived contaminants are less likely to adhere to the film surface, but also the metal layer of the hydrogen-releasing film is less likely to be corroded, and, as a result, even when the hydrogen-releasing film is used for a long period of time, its hydrogen-releasing performance is less likely to deteriorate.

It is preferable that the hydrogen-releasing film has a hydrogen-introducing side surface and a hydrogen-releasing side surface, and the hydrogen-introducing side surface has preferably a water contact angle of 85° or more.

In addition, the hydrogen-releasing film may be one which is formed by laminating the metal layer and the coat layer directly or with another layer interposed therebetween. In that case, it is preferable that one surface of the coat layer is the hydrogen-introducing side surface. Providing the coat layer on the hydrogen-introducing side surface of the metal layer hinders the hydrogen permeability of the hydrogen-releasing film, because of which no functional layer has been provided conventionally on the hydrogen-introducing side surface of the metal layer. However, by laminating the coat layer on one side of the metal layer and setting one side of the coat layer as the hydrogen-introducing side surface, it is easy to adjust the water contact angle on the hydrogen-introducing side surface to 85° or more. Thus, the gradual deterioration in hydrogen-releasing performance can be effectively suppressed. The deterioration in hydrogen permeability of the hydrogen-releasing film by providing the coat layer can be minimized by adjusting the material and thickness of the coat layer.

It is preferable that the coat layer contains at least one compound selected from the group consisting of a fluorine-based compound, a rubber-based polymer, and a silicone-based polymer. By using these compounds, it becomes easy to adjust the water contact angle to 85° or more. In addition, these compounds are less likely to inhibit the hydrogen permeability of the hydrogen-releasing film.

It is preferable that the coat layer has a thickness of 0.1 to 80 µm. When the thickness of the coat layer is less than 0.1 µm, it is difficult to obtain a uniform coating film, and contaminants derived from gas tend to easily adhere to the film. On the other hand, when the thickness of the coat layer exceeds 80 µm, the hydrogen permeability of the hydrogen-releasing film tends to be poor.

The metal layer is preferably an alloy layer containing a Pd alloy from the viewpoint of being excellent in hydrogen permeability, oxidation resistance, and resistance to brittleness upon occluding hydrogen.

The Pd alloy preferably contains 20 to 65 mol% of the group 11 element. In addition, the group 11 element is preferably at least one element selected from the group consisting of Au, Ag, and Cu.

The alloy layer containing a Pd-group 11 element alloy has a function of dissociating hydrogen molecules into hydrogen atoms on the film surface to solid-solve hydrogen atoms in the film; diffusing the solid solution of hydrogen atoms from the high-pressure side to the low-pressure side; converting hydrogen atoms into hydrogen molecules again on the film surface of the low-pressure side; and releasing the hydrogen. When the content of the group 11 element is less than 20 mol%, the strength of the alloy tends to be insufficient or the function tends to be difficult to be developed, and when the content of the group 11 element exceeds 65 mol%, the hydrogen permeation rate is likely to decline.

The hydrogen-releasing film of the present invention preferably has a support on one side or both sides of the metal layer. The support is provided in order to prevent the metal layer from falling into the electrochemical element when the metal layer is detached from the safety valve. In addition, the metal layer is required to have a self-destructive function as a safety valve when the internal pressure of the electrochemical element becomes equal to or greater than a predetermined value. If the metal layer is a thin film, it has a risk of self-destruction before the internal pressure of the electrochemical element reaches a predetermined value because of the low mechanical strength of the metal layer and results in failure to fulfill the function as a safety valve. Therefore, when the metal layer is a thin film, it is preferable to laminate a support on one side or both sides of the metal layer in order to improve the mechanical strength.

Also, the present invention relates to a safety valve for an electrochemical element, which is provided with the hydrogen-releasing film, and relates to an electrochemical element having the safety valve. The electrochemical element includes, for example, an aluminum electrolytic capacitor and a lithium-ion battery.

Also, the present invention relates to a method for releasing hydrogen, comprising using the hydrogen-releasing film or using the safety valve for electrochemical elements.

In the method for releasing hydrogen of the present invention, it is preferable to release hydrogen using the hydrogen- releasing film or the like in an environment of 150°C or less.

### EFFECT OF THE INVENTION

Even when the electrochemical element is used for a long period of time, the hydrogen-releasing film of the present invention rarely undergoes the deterioration in hydrogen-releasing performance and can stably release hydrogen. In addition, the hydrogen-releasing film of the present invention not only can rapidly release only the hydrogen gas generated in the inside of the electrochemical element to the outside, but also can prevent impurities from the outside from penetrating the inside of the electrochemical element. Moreover, a safety valve provided with the hydrogen-releasing film of the present invention can reduce the internal pressure by self-destruction if the internal pressure of the electrochemical element has rapidly increased, so that the rupture of the electrochemical element itself can be prevented. These effects enable the performance of the electrochemical element to be maintained for a long time, making it possible to prolong the life of the electrochemical element.

### BRIEF DESCRIPTION OF THE DRAWINGS

Fig. 1 is a schematic sectional view showing the structure of the hydrogen-releasing film of the present invention.
Fig. 2 is a schematic sectional view showing the another structure of the hydrogen-releasing film of the present invention.

### MODE FOR CARRYING OUT THE INVENTION

Hereinafter, embodiments of the present invention will be described.

The hydrogen-releasing film of the present invention has at least a metal layer. The metal forming the metal layer is not particularly limited as long as it is a simple substance or a metal having a hydrogen permeating function by alloying, and examples thereof may include Pd, Nb, V, Ta, Ni, Fe, Al, Cu, Ru, Re, Rh, Au, Pt, Ag, Cr, Co, Sn, Zr, Y, Ce, Ti, Ir, Mo, and an alloy containing two or more of these metals.

The metal layer is preferably an alloy layer containing a Pd alloy. The other metal forming the Pd alloy is not particularly limited, but an element of group 11 is preferably used, and at least one element selected from the group consisting of Au, Ag, and Cu is more preferably used. In particular, the Pd-Au alloy is preferable because it has an excellent corrosion resistance to a gas component generated from an electrolytic solution or a constituent member inside the electrochemical element. The Pd alloy preferably contains 20 to 65 mol%, more preferably 30 to 65 mol%, still more preferably 30 to 60 mol%, and particularly preferably 40 to 60 mol% of the group 11 element. The alloy layer containing a Pd-Ag alloy having an Ag content of 20 mol% or more, a Pd-Cu alloy having a Cu content of 30 mol% or more, or a Pd-Au alloy having an Au content of 20 mol% or more is preferable because such an alloy layer is difficult to embrittle with hydrogen even in a low temperature range of about 50 to 60°C or less. In addition, the Pd alloy may contain a Group IB and/or Group IIIA metal as long as the effect of the present invention is not impaired.

The alloy layer containing a Pd alloy may be not only the above alloy containing two components including Pd but also an alloy containing three components of, for example, Pd-Au-Ag or Pd-Au-Cu. Further, the alloy layer containing a Pd alloy may be an alloy containing four components of Pd-Au-Ag-Cu. For example, in the case of a multi-component alloy containing Pd, Au and other metals, the total content of Au and other metals in the Pd-Au alloy is preferably 55 mol% or less, more preferably 50 mol% or less, still more preferably 45 mol% or less, particularly preferably 40 mol% or less.

The metal layer can be produced by, for example, a rolling method, a sputtering method, a vacuum deposition method, an ion plating method, and a plating method, but when producing a thick metal layer, it is preferable to use the rolling method and when producing a thin metal layer, it is preferable to use the sputtering method.

The rolling method may be a hot rolling method or a cold rolling method. The rolling method is a method comprising rotating a pair or pairs of rolls (rollers) and processing a raw material, metal into a film by passing it between the rolls under pressure.

The thickness of the metal layer obtained by the rolling method is preferably 5 to 50 µm, more preferably 10 to 30 µm. If the thickness of the layer is less than 5 µm, pinholes or cracks are likely to occur in the production of the layer, and deformation of such a layer easily occurs after absorbing hydrogen. On the other hand, when the thickness of the layer is more than 50 µm, such a layer is not desirable because its hydrogen-releasing performance is reduced due to a long time required for the hydrogen permeation and because the layer is inferior in terms of cost.

The sputtering method is not particularly limited, and can be carried out by using a sputtering apparatus such as a parallel flat plate type sputtering apparatus, a sheet type sputtering apparatus, a passing type sputtering apparatus, a DC sputtering apparatus, and an RF sputtering apparatus. For example, after having attached a substrate to a sputtering apparatus in which a metal target is placed, the sputtering apparatus is evacuated, adjusted to a predetermined pressure value with an Ar gas, and a predetermined sputtering current is charged to the metal target, thereby to form a metal film on the substrate. Then, the metal film is peeled off from the substrate to obtain a metal layer. It should be noted that it is possible to use, as the target, a single or multiple targets according to the metal layer to be produced.

As the substrate, it includes, for example, a glass plate, a ceramic plate, a silicon wafer, and a metal plate such as aluminum and stainless steel.

The thickness of the metal layer obtained by the sputtering method is preferably 0.01 to 5 µm, more preferably 0.05 to 2 µm. If the thickness of the layer is less than 0.01 µm, not only may pinholes be formed, but also it is difficult to obtain a required mechanical strength. Also, when the layer is peeled off from the substrate, it is likely to be damaged and its handling after the peeling becomes difficult. On the other hand, when the thickness of the layer is more than 5 µm, it takes time to produce the metal layer and such a layer is inferior in regards to cost, which is not desirable.

The film area of the metal layer can be appropriately adjusted in consideration of the hydrogen permeation amount and the film thickness, but when the hydrogen-releasing film is used as a component of a safety valve, the film area is about 0.01 to 100 mm². It should be noted that the film area in the present invention is an area of actually releasing hydrogen in the metal layer and does not include a portion coated with a ring-shaped adhesive which will be described later.

At least one side of the hydrogen-releasing film having the metal layer has a water contact angle of 85° or more, preferably 90° or more, more preferably 95° or more, still more preferably 100° or more. When the water contact angle is 85° or more, the gas-derived contaminants are less likely to adhere to the film surface, and the metal layer of the hydrogen-releasing film is less susceptible to corrosion. As a result, even when the hydrogen-releasing film is used for a long period of time, it rarely undergoes the deterioration in hydrogen-releasing performance. The upper limit of the water contact angle is not particularly limited, but it is practically about 170°.

The hydrogen-releasing film has a hydrogen-introducing side surface and a hydrogen-releasing side surface, and the water contact angle on the hydrogen-introducing side surface is preferably 85° or more.

There is no particular limitation on the method of adjusting the water contact angle on the film surface of the hydrogen-releasing film to 85° or more, and examples of such method include a method in which fine irregularities are formed on the surface of the metal layer, and the water contact angle is adjusted to 85° or more; a method in which a thin film is formed on the surface of the metal layer by a vacuum evaporation method and the water contact angle is adjusted to 85° or more; and a method in which a coat layer having a surface with a water contact angle of 85° or more is laminated on the metal layer directly or with another layer interposed therebetween.

There is no particular limitation on the method for forming fine irregularities on the surface of the metal layer, and examples thereof include femtosecond laser processing for surface treatment using an ultrahigh-frequency pulsed laser, anodic oxidation treatment in an aqueous H₂SO₄ solution, anodic oxidation treatment in an aqueous NaOH solution, and FPP treatment of projecting hard fine particles having a particle size of several tens of µm on the surface of the metal layer at a high speed.

The method of forming a thin film on the surface of the metal layer by a vacuum evaporation method is not particularly limited. For example, it is possible to collide and adhere the vapor deposition material, which has become gas molecules by vaporization or sublimation by heating in high vacuum, to the metal layer, thereby to be able to form a deposited thin film. The vapor deposition material is not particularly limited as long as the water contact angle of the obtained thin film is 85° or more, but an organic compound having a perfluoroalkyl derivative is preferable. The deposited thin film may be subjected to polymerization treatment by heating or ultraviolet irradiation.

The material of the coat layer is not particularly limited as long as it can form a surface having a water contact angle of 85° or more, and examples thereof include a fluorine-based compound, a rubber-based polymer, a silicone-based polymer, a urethane-based polymer, and a polyester-based polymer. Among these, from the viewpoint that the water contact angle is large and the hydrogen permeability of the hydrogen-releasing film is less likely to be inhibited, it is preferable to use at least one kind selected from the group consisting of a fluorine-based compound, a rubber-based polymer, and a silicone-based polymer.

Examples of the fluorine-based compounds include fluoroalkyl group-containing compounds (e.g. fluoroalkyl carboxylates, fluoroalkyl quaternary ammonium salts, fluoroalkyl ethylene oxide adducts, etc.); perfluoroalkyl group-containing compounds (e.g. perfluoroalkyl carboxylates, perfluoroalkyl quaternary ammonium salts, perfluoroalkyl ethylene oxide adducts, etc.); fluorocarbon group-containing compounds (e.g. tetrafluoroethylene/hexafluoropropylene copolymers, tetrafluoroethylene/perfluoroalkyl vinyl ether copolymers, etc.); tetrafluoroethylene polymers; copolymers of vinylidene fluoride and tetrafluoroethylene; copolymers of vinylidene fluoride and hexafluoropropylene; fluorine-containing (meth)acrylic esters; fluorine-containing (meth)acrylate ester polymers; fluorine-containing (meth)acrylic alkyl ester polymers; copolymers of fluorine-containing (meth) acrylic esters and other monomers, and the like.

In addition, as the fluorine-based compound which is a raw material of the coat layer, "DuraSurf" series manufactured by Harves Co., Ltd., "Optool" series manufactured by Daikin Industries, Ltd., and "KY-100" series manufactured by Shin-Etsu Chemical Co., Ltd. may be used.

Examples of the rubber-based polymers include natural rubber, styrene butadiene rubber, acrylonitrile butadiene rubber, chloroprene rubber, polyisoprene rubber, polybutadiene rubber, ethylene propylene rubber, ethylene-propylene-diene terpolymer rubber, chlorosulfonated polyethylene rubber, and ethylene-vinyl acetate copolymer rubber.

Further, as the rubber-based polymer which is a raw material of the coat layer, "ELEP COAT" series manufactured by Nitto Shinko Corporation may be used.

Examples of the silicone-based polymers include polydimethylsiloxane, alkyl-modified polydimethylsiloxane, carboxyl-modified polydimethylsiloxane, amino-modified polydimethylsiloxane, epoxy-modified polydimethylsiloxane, fluorine-modified polydimethylsiloxane, (meth)acrylate-modified polydimethylsiloxane, and the like.

The coat layer can be formed, for example, by coating a coat layer raw material composition on a metal layer or another layer provided on the metal layer and curing the composition.

The coating method is not particularly limited, and examples thereof include a roll coating method, a spin coating method, a dip coating method, a spray coating method, a bar coating method, a knife coating method, a die coating method, an ink jet method, a gravure coating method, and the like.

The solvent may be appropriately selected depending on the material of the coat layer. When a fluorine-based compound is used as a raw material for the coat layer, solvents, such as fluorine-based solvents, alcohol-based solvents, ether-based solvents, ester-based solvents and hydrocarbon-based solvents, can be used singly or in combination thereof. Among them, it is preferable to use a fluorine-based solvent which does not have inflammability and quickly volatilizes, singly or as a mixture with other solvents .

Examples of the fluorine-based solvents include hydrofluoroether, perfluoropolyether, perfluoroalkane, hydrofluoropolyether, hydrofluorocarbon, perfluorocycloether, perfluorocycloalkane, hydrofluorocycloalkane, xylene hexafluoride, hydrofluorochlorocarbon, perfluorocarbon, and the like.

The thickness of the coat layer is not particularly limited, but the lower limit is preferably 0.1 µm or more, more preferably 0.3 µm or more, still more preferably 0.5 µm or more, particularly preferably 1.0 µm or more, and the upper limit thereof is preferably 80 µm or less, more preferably 50 µm or less, still more preferably 30 µm or less, even more preferably 20 µm or less, yet even more preferably 10 µm or less, particularly preferably 5 µm or less.

The thickness of the coat layer can be adjusted by the solid content concentration of the coat layer raw material composition and the number of times of coating.

The coat layer is preferably a non-porous layer so as to prevent permeation of gas-derived contaminants.

A support may be provided on one side or both sides of the metal layer. In particular, since the metal layer obtained by the sputtering method has a thin film thickness, it is preferable to laminate a support on one side or both sides of the metal layer in order to improve the mechanical strength.

In a preferred embodiment of the hydrogen-releasing film of the present invention, a coat layer containing a fluorine-based compound is provided in a metal layer containing a Pd alloy, and in particular, a coat layer containing a fluorine-based compound is preferably provided in a Pd alloy containing at least one kind of group 11 elements selected from the group consisting of Au, Ag, and Cu.

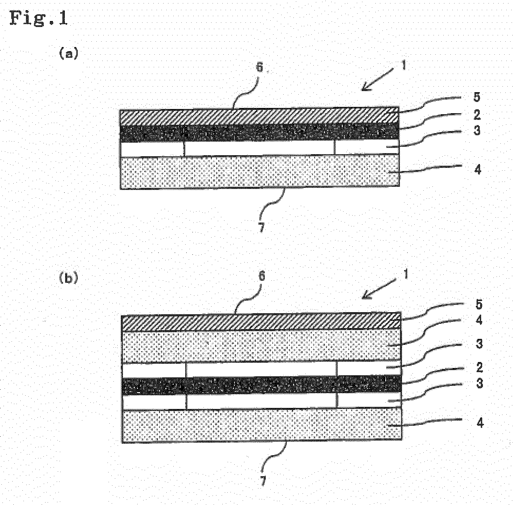

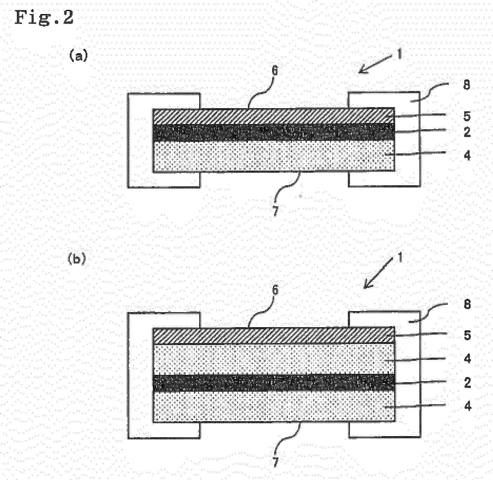

Figs. 1 and 2 are schematic sectional views showing the structure of a hydrogen-releasing film 1 of the present invention. The hydrogen-releasing film 1 has a hydrogen-introducing side surface 6 and a hydrogen-releasing side surface 7. As shown in Fig. 1(a) or 1(b), a support 4 may be laminated on one side or both sides of a metal layer 2 using a ring-shaped adhesive 3, or the support 4 may be laminated on one side or both sides of the metal layer 2 using a jig 8 as shown in Fig. 2(a) or 2(b). Further, a coat layer 5 may be provided on the metal layer 2 or on the support 4.

The support 4 is hydrogen permeable and is not particularly limited as long as it can support the metal layer 2. The support may be a non-porous body or may be a porous body. Also, the support 4 may be a woven fabric or may be a non-woven fabric. As a material for forming the support 4, it includes, for example, polyolefin such as polyethylene and polypropylene, polyester such as polyethylene terephthalate and polyethylene naphthalate, polyarylethersulfone such as polysulfone and polyethersulfone, fluororesin such as polytetrafluoroethylene and polyvinylidene fluoride, epoxy resin, polyamide, polyimide, and the like. Of these, polysulfone or polytetrafluoroethylene, which are chemically and thermally stable, is preferably used.

The support 4 is preferably a porous body having an average pore diameter of 100 µm or less. When the average pore diameter exceeds 100 µm, the surface smoothness of the porous body is lowered, so that it is difficult to form a metal layer having a uniform film thickness on the porous body when manufacturing the metal layer by a sputtering method or the like, and pinholes or cracks are likely to occur in the metal layer.

The thickness of the support 4 is not particularly limited, but is usually about 5 to 1000 µm, preferably 10 to 300 µm.

When producing the metal layer 2 by the sputtering method, such layer can be directly formed on the support 4 which is used as a substrate and the hydrogen-releasing film 1 can be produced without using the adhesive 3 or jig 8. Thus, this method is preferable from the viewpoint of physical properties and production efficiency of the hydrogen-releasing film 1. In that case, it is preferable to use, as the support 4, a porous body having an average pore diameter of 100 µm or less, more preferable to use a porous body having an average pore diameter of 5 µm or less, and particularly preferable to use an ultrafiltration membrane (UF membrane).

The shape of the hydrogen-releasing film of the present invention may be substantially circular or polygonal such as triangle, square, and pentagon. Any shape can be taken depending on the application to be described later.

The hydrogen-releasing film of the present invention is particularly useful as a component of a safety valve for an aluminum electrolytic capacitor or a lithium-ion battery. Furthermore, the hydrogen-releasing film of the present invention may be provided on an electrochemical element as a hydrogen-releasing valve aside from the safety valve.

The method for releasing hydrogen generated in the inside of the electrochemical element by using the hydrogen-releasing film of the present invention is not particularly limited. However, the hydrogen-releasing film of the present invention can be provided on, for example, a part of an exterior portion of an aluminum electrolytic capacitor or a lithium-ion battery so as to be used as a diaphragm between the inside and the outside of the exterior portion. In such a case, the inside and the outside of the exterior portion are separated by the hydrogen-releasing film, and the hydrogen-releasing film does not permeate a gas other than hydrogen. Hydrogen generated in the inside of the exterior portion is released through the hydrogen-releasing film by an increased pressure so that the pressure of the inside of the exterior portion does not increase exceeding a predetermined pressure.

The hydrogen-releasing film of the present invention has an advantage that it can be used at a temperature of, for example, 150°C or less, furthermore 110°C or less, since such a film is not embrittled at low temperatures by appropriately adjusting its alloy composition. That is, depending on the usage, the hydrogen-releasing film of the present invention is especially preferably used in the hydrogen-releasing method for an aluminum electrolytic capacitor or a lithium-ion battery which is not used at a high temperature (for example, 400 to 500°C) .

### Examples

Description will be given of the invention with examples, while the invention is not limited to description in the examples.

### Production Example 1

### [Preparation of Pd-Au Alloy Layer by Rolling Method (Content of Au: 30 mol%)]

The raw materials Pd and Au were each weighed so that the content of Au in an ingot became 30 mol%, charged into an arc melting furnace equipped with a water-cooled copper crucible and subjected to arc melting in an Ar gas atmosphere under atmospheric pressure. The obtained button ingot was cold-rolled to a thickness of 5 mm using a two-stage rolling mill having a diameter of 100 mm to obtain a rolled sheet material. Then the rolled sheet material was placed in a glass tube and the both ends of the glass tube were sealed. After reducing the inside pressure of the glass tube to 5 × 10⁻⁴ Pa at room temperature, the temperature was then raised to 700°C and the glass tube was allowed to stand for 24 hours, followed by cooling to room temperature. By this heat treatment, the segregation of Pd and Au in the alloy was removed. Then, the sheet material was cold-rolled to 100 µm using a two-stage rolling mill having a roll diameter of 100 mm and further cold-rolled to 20 µm using a two-stage rolling mill having a roll diameter of 20 mm. Then the rolled sheet material was placed in a glass tube and the both ends of the glass tube were sealed. The inside pressure of the glass tube was reduced to 5 × 10⁻⁴ Pa at room temperature, the temperature was then raised to 500°C, and the glass tube was allowed to stand for 1 hour, followed by cooling to room temperature. By this heat treatment, the internal strain in the Pd-Au alloy caused by rolling was removed, to prepare a Pd-Au alloy layer having a thickness of 20 µm and an Au content of 30 mol%.

### Production Example 2

### [Preparation of Pd-Ag Alloy Layer by Rolling Method (Content of Ag: 30 mol%)]

A Pd-Ag alloy layer having a thickness of 20 µm and an Ag content of 30 mol% was prepared in the same manner as in Production Example 1, except that the raw materials Pd and Ag were respectively used so that the content of Ag in an ingot became 30 mol%.

### Example 1

A coat layer raw material composition (DURASURF DS-3302TH, manufactured by Harves Co., Ltd.) was coated by a dip coating method on one side of the Pd-Au alloy layer produced in Production Example 1, and dried to form a coat layer, thereby to prepare a hydrogen-releasing film.

### Example 2

A hydrogen-releasing film was prepared in the same manner as in Example 1 except that DURASURF DS-3308TH (manufactured by Harves Co. Ltd.) was used instead of DURASURF DS-3302TH in Example 1.

### Example 3

A hydrogen-releasing film was prepared in the same manner as in Example 1 except that a coat layer raw material composition having a solid content concentration of 14 wt%, which was obtained by mixing DURASURF DS-3308TH (manufactured by Harves Co., Ltd.) and DURASURF DS-3320C (manufactured by Harves Co., Ltd.) in equal amounts, was used instead of DURASURF DS-3302TH in Example 1.

### Example 4

A hydrogen-releasing film was prepared in the same manner as in Example 1 except that DURASURF DS-3320C (manufactured by Harves Co. Ltd.) was used instead of DURASURF DS-3302TH in Example 1.

### Example 5

A hydrogen-releasing film was prepared in the same manner as in Example 1 except that DURASURF DS-3330C (manufactured by Harves Co. Ltd.) was used instead of DURASURF DS-3302TH in Example 1.

### Example 6

After applying a coat layer raw material composition and drying the composition in the same manner as in EXAMPLE 5, a hydrogen-releasing film was prepared in the same manner as in EXAMPLE 5, except that DURASURF DS-3330C (manufactured by Harves Co. Ltd.) was further applied and dried.

### Example 7

A hydrogen-releasing film was prepared in the same manner as in Example 1 except that DURASURF DS-5480H (manufactured by Harves Co. Ltd.) was used instead of DURASURF DS-3302TH in Example 1.

### Example 8

A hydrogen-releasing film was prepared in the same manner as in Example 1, except that ELEP COAT LSS-520MH (manufactured by Nitto Shinko Corp.) was used instead of DURASURF DS-3302TH in Example 1.

### Comparative Example 1

The Pd-Au alloy layer produced in Production Example 1 was used as a hydrogen-releasing film.

### Comparative Example 2

A hydrogen-releasing film was prepared in the same manner as in Example 1 except that G-90 (manufactured by Nikken Co., Ltd.) was used instead of DURASURF DS-3302TH in Example 1.

### Comparative Example 3

The Pd-Ag alloy layer produced in Production Example 2 was used as a hydrogen-releasing film.

### [Measurement and Evaluation Method]

### (Measurement of Contact Angle)

The water contact angle on the hydrogen-introducing side surface of the hydrogen-releasing film was measured in accordance with JIS R3257 (wettability test method of glass substrate surface) and the static contact angle was measured using a contact angle measurement device (OCA series manufactured by EKO Instruments). Specifically, 8 µL of pure water was dropped on a 2 × 2 cm square sample in an atmosphere at 25°C, and the angle θ formed between the liquid surface and the sample surface (see the following drawing) was measured with a microscope. The average value of θ values on the left and right was taken as the contact angle.

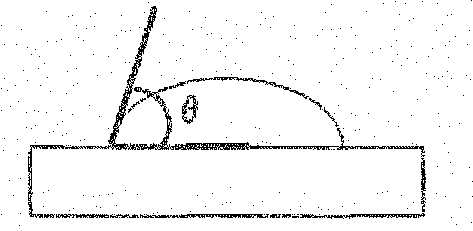

### (Evaluation of Hydrogen Permeability)

The prepared hydrogen-releasing film was attached to a VCR connector manufactured by Swagelok Company, and an SUS tube was attached to one side of the connector. In this way, a sealed space (63.5 ml) was produced. After the pressure inside the tube was reduced by a vacuum pump, the pressure of the hydrogen gas was adjusted to 0.15 MPa, and a pressure change in an environment of 105°C was monitored. Since the number of moles of hydrogen (volume) transmitted through the hydrogen-releasing film can be known by the pressure change, this volume was converted to a permeation amount per day and taken as a hydrogen permeation amount. For example, when the pressure changes from 0. 15 MPa to 0.05 MPa (variation 0.10 MPa) in 2 hours, the volume of hydrogen that has passed through the hydrogen-releasing film is 63.5 ml. Therefore, the hydrogen permeation amount per day is 63.5 × 24/2=762 ml/day. The hydrogen permeation amount of the hydrogen-releasing film is preferably 10 ml/day or more, more preferably 40 ml/day or more, still more preferably 70 ml/day or more, particularly preferably 100 ml/day or more. The upper limit value of the hydrogen permeation amount is about 1000 ml/day.

### (Evaluation of Corrosion Resistance)

In a sealed SUS can, 2 g of diammonium adipate (manufactured by Wako Pure Chemical Industries, Ltd.) and 18 g of ethylene glycol were charged as a model electrolytic solution. In order to expose only the coat layer side surface to contaminants, the surface of the alloy layer side of the produced hydrogen-releasing film (15 mm × 15 mm) was masked with aluminum foil and the film was hung from the lid of the SUS can. Thereafter, the SUS can was heated to 105°C and allowed to stand for 96 hours, and the coat layer side surface of the hydrogen-releasing film was exposed by the gas generated from the two kinds of compounds described above. Thereafter, the aluminum foil was removed from the alloy layer side surface, and the hydrogen permeation amount of the hydrogen-releasing film was measured by the same method as described above. The retention rate of the hydrogen permeation amount before and after the exposure treatment is required to be 40% or more, preferably 50% or more, more preferably 60% or more, still more preferably 70% or more, particularly preferably 80% or more.

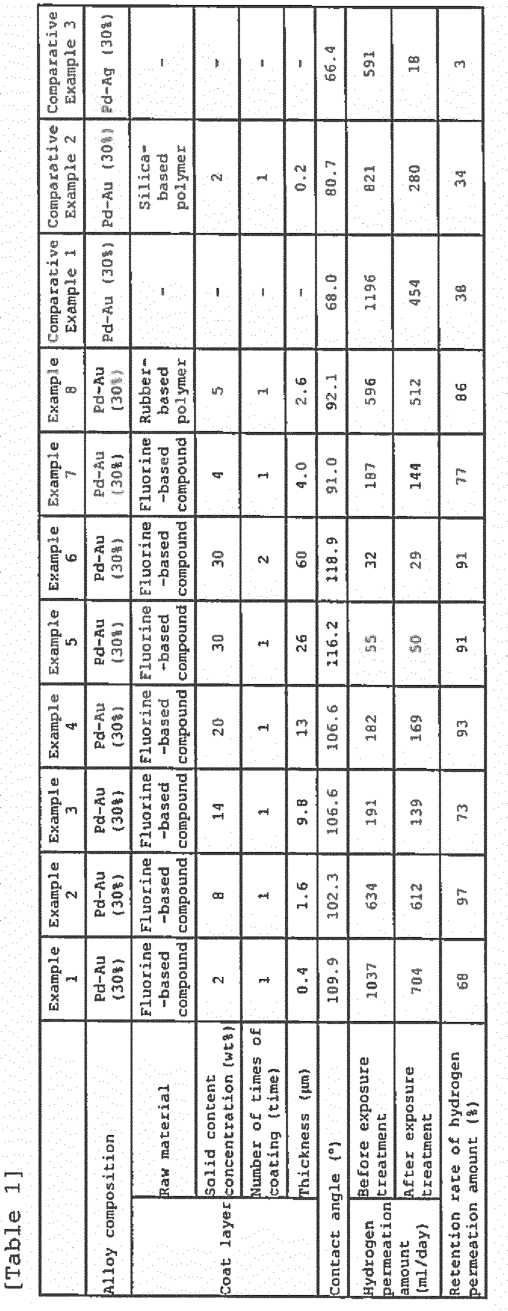

It is understood from Table 1 that the hydrogen-releasing films having a water contact angle of 85°C or more of Examples 1 to 8 are hardly contaminated on the surface and rarely undergo the decline in the hydrogen-releasing performance since the alloy layer is hardly corroded. On the other hand, in the hydrogen-releasing films each having a water contact angle of less than 85°C of Comparative Examples 1 to 3, the surface tends to be contaminated and the alloy layer is easily corroded, so that it is understood that the hydrogen-releasing performance greatly deteriorates.

### INDUSTRIAL APPLICABILITY

The hydrogen-releasing film of the present invention is preferably used as a component of a safety valve provided on an electrochemical element such as a battery, a condenser, a capacitor, a sensor, and the like.

### DESCRIPTION OF REFERENCE SIGNS

- 1:: Hydrogen-releasing film
- 2:: Metal layer
- 3:: Adhesive
- 4:: Support
- 5:: Coat layer
- 6:: Hydrogen-introducing side surface
- 7:: Hydrogen-releasing side surface
- 8:: Jig

## Claims

1. A hydrogen-releasing film having a metal layer, wherein at least one surface of the hydrogen-releasing film has a water contact angle of 85° or more.

2. The hydrogen-releasing film according to claim 1, which has a hydrogen-introducing side surface and a hydrogen-releasing side surface, wherein the hydrogen-introducing side surface has a water contact angle of 85° or more.

3. The hydrogen-releasing film according to claim 1 or 2, which is formed by laminating the metal layer and a coat layer directly or with another layer interposed therebetween.

4. The hydrogen-releasing film according to claim 3, wherein one surface of the coat layer is the hydrogen-introducing side surface.

5. The hydrogen-releasing film according to claim 3 or 4, wherein the coat layer contains at least one compound selected from the group consisting of a fluorine-based compound, a rubber-based polymer, and a silicone-based polymer.

6. The hydrogen-releasing film according to any one of claims 3 to 5, wherein the coat layer has a thickness of 0.1 to 80 µm.

7. The hydrogen-releasing film according to any one of claims 1 to 6, wherein the metal layer is an alloy layer containing a Pd alloy.

8. The hydrogen-releasing film according to claim 7, wherein the Pd alloy contains 20 to 65 mol% of a group 11 element.

9. The hydrogen-releasing film according to claim 8, wherein the group 11 element is at least one kind selected from the group consisting of Au, Ag, and Cu.

10. The hydrogen-releasing film according to any one of claims 1 to 9, which has a support on one side or both sides of the metal layer.

11. A safety valve for electrochemical elements, which is equipped with the hydrogen-releasing film according to any one of claims 1 to 10.

12. An electrochemical element equipped with the safety valve for electrochemical elements according to claim 11.

13. The electrochemical element according to claim 12, which is an aluminum electrolytic capacitor or a lithium-ion battery.

14. A method for releasing hydrogen, comprising using the hydrogen-releasing film according to any one of claims 1 to 10 or using the safety valve for electrochemical elements according to claim 11.

15. The method for releasing hydrogen according to claim 14, wherein hydrogen is released under an environment of 150°C or less.
